# EUROPÄISCHE PATENTSCHRIFT

(11) **EP 3 097 786 B1**
(45) Veröffentlichungstag und Bekanntmachung des Hinweises auf die Patenterteilung: **17.04.2019**
(21) Anmeldenummer: 15169371.0
(22) Anmeldetag: 27.05.2015
(51) Int. Cl.: A23G 3/20, A21C 15/00

(54) **EINLEGEVORRICHTUNG FÜR LOSE ARTIKEL, WIE Z.B. MANDELKERNE, HASELNUSSKERNE ETC**
INSERTION DEVICE FOR LOOSE ARTICLES, SUCH AS ALMOND KERNELS, HAZELNUTS ETC.
DISPOSITIF D'INSERTION POUR UN ARTICLE EN VRAC, PAR EXEMPLE AMANDES, NOISETTES ETC

(43) Veröffentlichungstag der Anmeldung: 30.11.2016
(73) Patentinhaber: Haas Food Equipment GmbH, 1210 Wien (AT)
(72) Erfinder: Haas, Johannes, 1040 Wien (AT); Haas, Josef, 2100 Leobendorf (AT); Jiraschek, Stefan, 2202 Königsbrunn (AT); Dolezel, Ralf, 1220 Wien (AT)
(74) Vertreter: Puchberger & Partner Patentanwälte

(56) Entgegenhaltungen:
- WO-A1-2009/046913
- US-A- 1 579 407
- US-A- 4 710 117
- US-A- 4 851 248

## Beschreibung

Die Erfindung bezieht sich auf eine Einlegevorrichtung zum Einbringen von losen Artikeln, wie z. B. Mandelkerne, Haselnusskerne, gepuffte Getreidekörner, Fruchtstücke etc., in die Vertiefungen von ebenen Produktplatten oder Produktformen, die mit in Längsreihen hintereinander angeordneten Plattenvertiefungen, wie z.B. gebackene Waffeltafeln, versehen sind.

Die Einlegevorrichtung ist beispielsweise für den Einsatz in der Süßwarenindustrie vorgesehen. Sie wird dort bei der Herstellung von Süßwarenprodukten eingesetzt, bei denen verschiedene Artikel, wie z. B. Mandelkerne, Haselnusskerne etc., dem Herstellungsprozess als lose Artikel zugeführt werden, und beim fertigen Süßwarenprodukt im Inneren des Produktes angeordnet sind und dort z. B. von Schokolade, einer Creme oder einer Füllmasse umhüllt sind. Diese Süßwarenprodukte können z. B. Konfektstücke, kleine formgebende Hohlwaffeln enthaltende Konfektstücke, Schokoladetafeln, Schokoladeriegeln etc. sein.

Die Einlegevorrichtung kann auch zum Beschicken von Gießformen eingesetzt werden, in denen Konfektstücke, Schokoladetafeln, Schokoladeriegel etc. entstehen. Die Einlegevorrichtung legt die losen Artikel in die leeren oder bereits teilweise gefüllten Vertiefungen dieser Gießformen ein.

Die Einlegevorrichtung kann bei der Herstellung von Konfektstücken eingesetzt werden, die kleine, formgebende Hohlwaffeln enthalten, die als Hohlkörperhälften ausgebildet sind. Die kleinen Hohlwaffeln werden als integrierte Teile von rechteckigen, gebackenen Waffeltafeln hergestellt, die beim Herstellen der Konfektstücke in die den kleinen Hohlwaffeln entsprechenden Teilstücke zerschnitten und aufgeteilt werden. Diese Waffeltafeln sind als ebene Platten ausgebildet, die an der Oberseite dem Hohlraum der Hohlkörperhälften entsprechende Vertiefungen und an der Unterseite den kleinen Hohlwaffeln entsprechende Ausbuchtungen besitzen. Diese Waffeltafeln sind ein knusprigsprödes Backprodukt, das in einem Waffelbackofen aus flüssigem Waffelteig hergestellt wird. Diese Waffeltafeln werden in der Süßwarenindustrie - wegen der in sie integrierten, als Hohlkörperhälften ausgebildeten, kleinen Hohlwaffeln und zum Unterscheiden von den ebenen Waffelblättern - auch als flache Hohlwaffeln bezeichnet. Mit der Einlegevorrichtung können unter anderem lose Artikel in die Vertiefungen dieser Waffeltafeln eingelegt werden.

Die US 1579407 (Smith) beschreibt eine Vorrichtung zum Einlegen von Artikeln, nämlich Mandeln oder Nüssen, in Formen zur Herstellung von Konfekt. Die Artikel werden am seitlich-unteren Ende eines trichterförmigen Aufnahmebehälters von einer Trommel aufgenommen und bis zu einer Rutsche bewegt, wobei die zylindrische Trommel mit einer achsparallelen Lochreihe versehen und innen mit Luftunterdruck beaufschlagt sind, sodass die Artikel an oder in den Löchern der Lochreihe haften bleiben, bis die Lochreihe von innen beim Drehen der Trommel abgedeckt ist, sodass die Artikel in die Rutsche fallen und weiter zur zugehörigen Aufnahmeform gelangen, wobei die Trommel eine zylindrische Innenwand und eine Außenwand aufweist und die Löcher von der Innenwand zur Außenwand reichen. Diese Vorrichtung ist jedoch für die industrielle Herstellung von Backwaren nicht geeignet.

Aufgabe der Erfindung ist es, eine Einlegevorrichtung vorzusehen, die maximale Sicherheit dafür gewährleistet, dass immer alle Vertiefungen der Produktplatten mit den Artikeln gefüllt werden und Verschmutzungen verhindert werden.

Die Erfindung schlägt eine Einlegevorrichtung zum Einbringen von losen Artikeln in die Plattenvertiefungen von ebenen Platten vor, bei denen die Vertiefungen in Längsreihen hintereinander angeordnet sind. Die Einlegevorrichtung umfasst eine die Artikel in einer losen Anordnung enthaltende, nach oben offene Sammelkammer, eine die Artikel einzeln aus der Sammelkammer nach oben hinausbefördernde Entnahmevorrichtung und eine die entnommenen und angehobenen Artikel in zumindest einer Rutsche zur Unterseite der Einlegevorrichtung hinunterführende Abgabevorrichtung.

Die Einlegevorrichtung weist eine drehbare Fördertrommel auf, die mit einem Trommelrohr versehen ist, welches in und an die Sammelkammer heranreicht und ist gemäß einem Merkmal der Erfindung dadurch gekennzeichnet, dass die um ihre Achse drehbare Fördertrommel am Trommelrohr zumindest zwei achsparallel angeordnete Lochreihen aufweist, dass das Trommelrohr eine zylindrische Innenwand und zylindrische Außenwandabschnitte aufweist, dass die Lochreihen jeweils im Bereich der zylindrischen Außenwandabschnitte angeordnet sind und dass zwischen den zylindrischen Außenwandabschnitten Einsenkungen in das Trommelrohr vorgesehen sind.

Weiters kann die Erfindung dadurch gekennzeichnet sein, dass das Trommelrohr der Fördertrommel über Ihren Umfang verteilt drei oder mehr Lochreihen, bevorzugt sechs, sieben oder acht Lochreihen aufweist. Die Fördertrommel kann bevorzugt einseitig ein coaxiales und mit einer Luftunterdruckquelle verbindbares Antriebsrohr aufweisen, welches drehbar gelagert und über eine Antriebseinheit angetrieben ist und wobei das Trommelrohr am freien Ende mit einem Trommeldeckel verschlossen ist. Bevorzugt weist das Trommelrohr im Inneren einen feststehenden Vakuumschieber zum Abdecken der jeweils vorbeigedrehten Lochreihe des Trommelrohrs auf, wobei sich der Vakuumschieber über alle Löcher der Lochreihe erstreckt. Der Vakuumschieber ist an einer feststehenden Welle, insbesondere Hohlwelle, befestigt, die zur Weiterleitung von außen zugeführter Druckluft und Zuleitung der Druckluft zu einem Ausblaskanal des Vakuumschiebers aufweist.

Die Einlegevorrichtung ist auch dadurch gekennzeichnet, dass das Trommelrohr an seinem freien Ende mit seinem Trommeldeckel über ein Trommelaußenlager an der Welle gelagert ist und dass das andere Ende der Welle mit einem Steckbolzen in einem Trommelinnenlager gelagert ist. Bevorzugt ist das Trommelrohr mit der in ihr angeordneten Welle und dem Vakuumschieber vom Antriebsrohr trennbar und bevorzugt über Schnellverschlüsse wieder anschließbar ausgebildet. Am innenseitigen Ende des Trommelrohres oder am Antriebsrohr ist eine Steuerscheibe, insbesondere eine Nockenscheibe, zum synchronisierten Betätigen nachgeschalteter Vorrichtungselemente vorgesehen.

Nach einem weiteren Merkmal weist der Vakuumschieber eine Aufnahmeplatte und eine auf dieser angeordnete und gegenüber der zylindrischen Innenwand des Trommelrohres dichtend anliegende Dichtplatte auf.

Der Ausblaskanal ist an der Gleitfläche der Dichtplatte angeordnet und über ein Luftrohr mit einer Druckluftquelle verbindbar. Die Löcher jeder Lochreihe können einen sich von Innen nach Außen verringernden Durchmesser aufweisen.

Die Einlegevorrichtung kann weiters dadurch gekennzeichnet sein, dass im aufsteigenden Bereich an der Außenseite der Fördertrommel im Bereich unmittelbar nach der Aufnahme der Artikel aus dem Sammelbehälter eine Abstreifeinheit vorgesehen ist, die zumindest zwei Kammstangen aufweist, deren Kammzähne jeweils unmittelbar zu beiden Seiten jedes Loches gehalten sind, um ein Zentrieren des angesaugten Artikels über dem vorbeigedrehten Loch zu gewährleisten und die Anlagerung mehrerer Artikel zu verhindern.

In Drehrichtung der Fördertrommel kann den beiden Kammstangen eine Bürste nachgeordnet sein, um überschüssig angesaugte Artikel abzustreifen. Die Abstreifeinheit kann ein Blasrohr mit gegen die Fördertrommel gerichteten Blasnadeln aufweisen.

Die Einlegevorrichtung ist weiters dadurch gekennzeichnet, dass im absteigenden Bereich der Fördertrommel eine Abgabeeinheit vorgesehen ist, die die Artikel den Plattenvertiefungen zuordnet und in diese abgibt. Die Abgabeeinheit weist für jedes Loch der Lochreihe eine schräg nach unten zur vorbeibewegten Produktplatte führende Rutsche mit einer den Artikel nach unten führenden Rinne auf, wobei die Rinne am unteren Ende von einem Artikeleinweiser in der Rinne gehalten und in die Plattenvertiefung abgegeben wird.

Die Artikeleinweiser sind nebeneinander auf einer von der Steuerscheibe und deren Nocken betätigten Welle angeordnet.

Oberhalb der Abgabeeinheit kann eine sich über die axiale Erstreckung des Trommelrohres oder der Lochreihe reichende Auffangswanne für herabfallende Artikel oder Artikelteile oder Schmutz angeordnet sein.

Bevorzugt ist die Einlegeeinheit auf einem mit Rädern versehenen Bodenrahmen montiert, sodass die Einlegeeinheit auf Schienen des Rahmengestells der Einlegevorrichtung bewegbar ist. Im Rahmengestell können auch zwei oder mehr Einlegeeinheiten in Serie vorgesehen sein. Weiters kann im Rahmengestell der Einlegeeinheit eine die Artikel in die Plattenvertiefungen eindrückende Andrückwalze vorgesehen sein.

Im Folgenden wird die Erfindung anhand der Zeichnungen beispielsweise beschrieben.
Fig. 1 zeigt eine Schrägansicht auf ein Ausführungsbeispiel einer Einlegevorrichtung mit zwei Einlegeeinheiten und einer Andrückwalze.
Fig. 2 zeigt eine schematische Schrägansicht einer Einlegeeinheit mit Blick auf den aufsteigenden Abschnitt der Fördertrommel.
Fig. 3 zeigt eine Schrägansicht einer Einlegeeinheit mit schräger Aufsicht auf den absteigenden Bereich der Fördertrommel.
Fig. 4 zeigt einen schematischen Längsschnitt durch die Fördertrommel.
Fig. 5 zeigt eine Schrägansicht der Fördertrommel schräg von oben.
Fig. 6 zeigt eine schematische Ansicht auf die Fördertrommel in radialer Richtung bei abgenommener Trommelkappe.
Fig. 7 zeigt eine Schrägansicht der kompletten Einlegeeinheit.

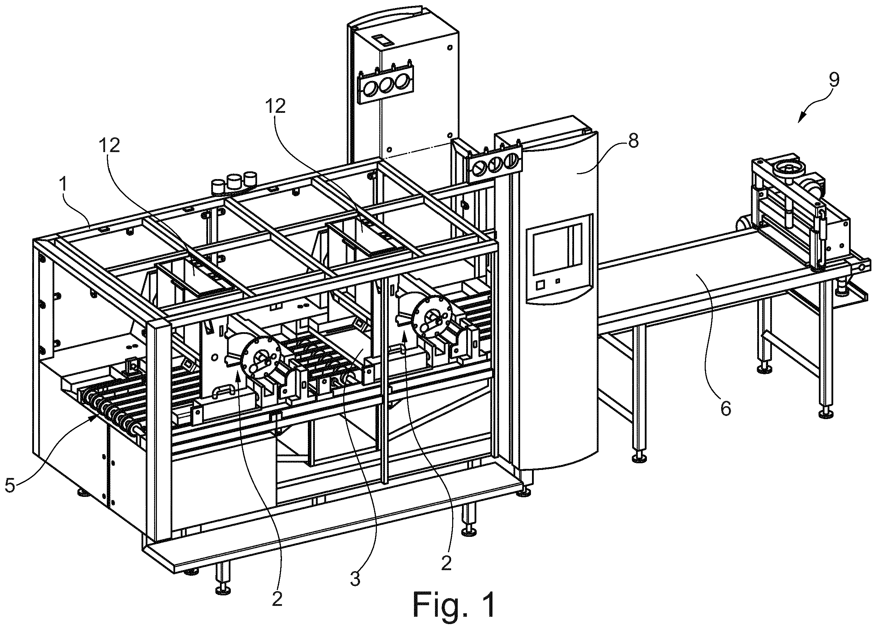

Die **Fig. 1** zeigt in Schrägansicht eine Einlegevorrichtung mit zwei Einlegeeinheiten und einer nachgeschalteten Andrückwalze. In Abhängigkeit von der Gesamtauslegung einer entsprechenden Produktionsstraße kann die Einlegevorrichtung auch bloß eine Einlegeeinheit oder auch drei oder mehr umfassen.

Die nachgeschaltete Andrückwalze ist fakultativ für Produkte vorzusehen, bei denen das Andrücken und die Dimensionsbegrenzung nach oben wichtig sind.

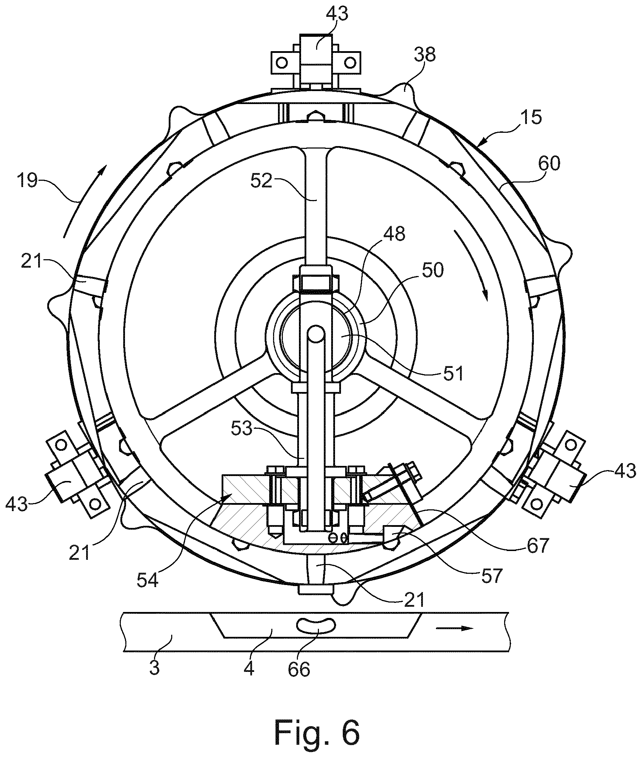

Die Einlegevorrichtung weist ein Rahmengestell 1 auf, in welches modulartig ein, zwei oder drei Einlegeeinheiten 2 einschiebbar sind. Produktplatten 3 mit darin ausgebildeten und nach unten stehenden Plattenvertiefungen 4 (siehe Fig. 6) werden von einer hier nicht dargestellten Zufuhreinrichtung dem Förderband 5 zugeleitet, werden durch die Einlegevorrichtung durchgeschoben, wobei die Einlegeeinheiten in jede Plattenvertiefung den gewünschten Artikel einlegen und zum Schluss wird die Produktplatte mit eingelegten Artikeln dem Transportband 6 übergeben.

Das Förderband 5 ist beispielsweise ein Rundriementransportband. Es können aber auch Flachriemen oder Ketten und dergleichen verwendet werden.

Die Produktplatten sind bevorzugt gebackene Waffeltafeln, mit Vertiefungen, wobei die Vertiefungen in Längsreihen und Querreihen angeordnet sind. Die einzulegenden Artikel sind beispielsweise Mandelkerne, Haselnusskerne, gepufferte Getreidekörner etc. Die Produktplatten können aber auch Produktformen sein, in die z.B. Cremen, Schokolade, Schaum oder Zuckerwasser eingefüllt werden kann.

Die losen Artikel werden in die jeweils zugehörige Sammelkammer 12 eingeschüttet und weiterverarbeitet, wie dies anhand der folgenden Zeichnungen erläutert wird.

Fig. 1 zeigt noch das Bedienpult 8, von der aus die Vorrichtung gesteuert werden kann. Als zusätzliche Vorrichtung ist in Fig. 1 noch die Andrückwalze 9 eingezeichnet, die beispielsweise dazu dient, die maximale Höhe des mit dem Artikel versehenen Produktes zu begrenzen und die Artikel in die Vertiefungen der Produktplatten einzudrücken. Bevorzugt sind die Plattenvertiefungen der ebenen Produktplatten bereits beim Eintritt in die Einlegevorrichtung mit einer Creme befüllt, in die der jeweilige Artikel eingedrückt werden kann.

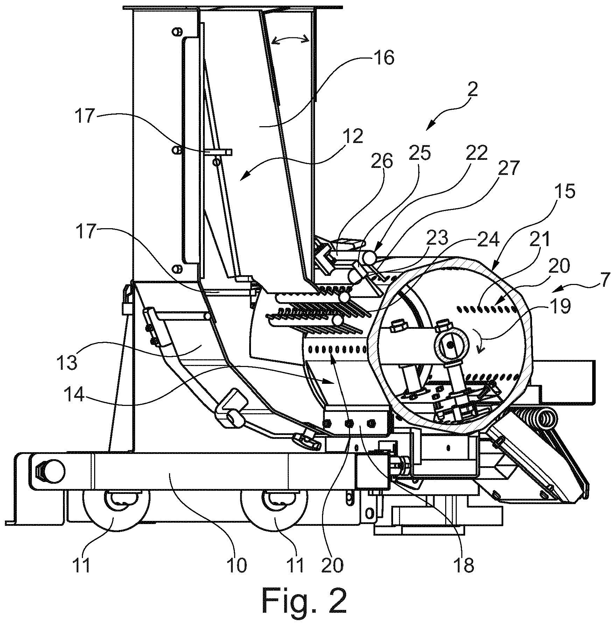

Die **Fig. 2** zeigt in Schrägansicht die Einlegeeinheit 2, die auf einem Bodenrahmen 10 aufgesetzt ist und mittels Räder 11 auf zugehörigen Schienen der Einlegevorrichtung verfahrbar ist.

Die Sammelkammer 12 ist von oben mit den Artikeln befüllbar. Die Artikel rutschen nach unten und über das Leitblech 13 in Richtung zum aufsteigenden Bereich 14 der Fördertrommel 15.

Zur besseren Darstellung ist die Fördertrommel 15 nach vorne hin offen und teilweise durchsichtig dargestellt. Die für den Betrieb notwendige abdichtende Trommelkappe ist abgenommen.

Die Sammelkammer 12 weist eine in ihrer Neigung verstellbare Vorderwand 16 auf. Durch die Variation der Schrägstellung kommt es zu einer besseren Durchmischung der eingeschütteten Artikel, um diese weitgehend am Verkleben oder Zusammenbacken zu hindern. Weiters können die hier eingezeichneten Rüttelstäbe 17 zum Durchmischen der Sammelkammer vorgesehen sein.

Am unteren vorderen Ende der Sammelkammer 12 ist ein Abstreifer 18 aus Gummi angeordnet, der etwaige Verschmutzungen oder restliche Artikel oder Artikelteile abstreift und den Spalt zur Trommel abdeckt. Die Sammelkammer 12 muss stets so gefüllt sein, dass die Artikel über einen genügend großen Bereich des aufsteigenden Bereiches 14 der Fördertrommel an dieser anliegen.

Im Betrieb wird die Fördertrommel in Uhrzeigerrichtung gemäß Pfeil 19 gedreht. Das Innere der Fördertrommel steht unter Unterdruck, wie dies später noch näher erläutert wird.

Die Lochreihen 20 werden durch die Drehung der Fördertrommel 15 durch das Bett der Artikel hindurchbewegt und die einzelnen Artikel werden durch die Löcher der Lochreihe angesaugt und durch den Unterdruck festgehalten. Um sicherzustellen, dass tatsächlich jedem der Löcher der Lochreihe nur ein Artikel zugeordnet ist und etwaige Verschmutzungen verhindert werden, ist eine Abstreifeinheit 22 vorgesehen. Diese Abstreifeinheit umfasst im vorliegenden Fall zwei Kammstangen 23 mit je einer Reihe von Zähnen 24, die bis an die Fördertrommel und deren Außenseite heranreichen. Die beiden Kammstangen 23 sind mit Kammzähnen 24 derart ausgestattet, dass die Zähne versetzt zueinander jedes der Löcher links und rechts überstreichen. Damit wird sichergestellt, dass jedem Loch 20 ein einzelner Artikel zugeordnet und in diesem zentriert angeordnet ist und bleibt.

Den Kammstangen nachgeordnet ist eine Bürste 25, die weich genug ist, dass die Artikel in den Löchern verbleiben, aber etwaige anhaftende Verschmutzungen von der Trommeloberfläche entfernt werden.

Weiters weist die Abstreifeinheit 22 als eine Alternative ein Blasrohr 26 mit gegen die Oberfläche der Fördertrommel gerichteten Blasennadeln oder Blasdüsen 27 auf. Damit ist es möglich, für manche Produkte die Reinigung der Trommeloberfläche und der Artikel zusätzlich noch mit Luftstrom vorzunehmen.

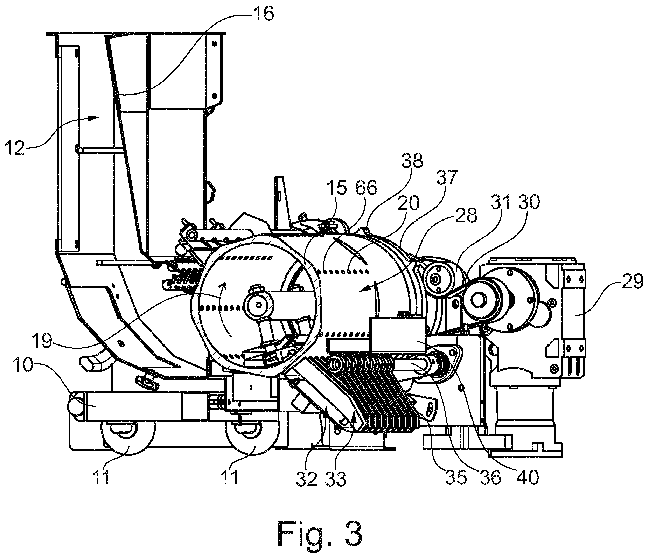

Die **Fig. 3** zeigt die Einlegeeinheit, wie sie auch in Fig. 2 dargestellt ist, in einer anderen Blickrichtung mit Blick auf den absteigenden Bereich 28 der Fördertrommel 15. Der Trommelantrieb erfolgt von der Antriebseinheit 29 mittels Zahnriemen 30 auf die Fördertrommel, wobei eine Spannrolle 31 für die notwendige Spannung des Zahnriemens Sorge trägt. Die von der Fördertrommel aus der Sammelkammer 12 entnommenen Artikel werden zufolge der Drehung der Fördertrommel mitgenommen und zur Abgabeeinheit transportiert. Die Abgabeeinheit 32 dient dazu, die Artikel einzeln von den Löchern einer Lochreihe den Plattenvertiefungen der Produktplatte zuzuordnen und in diese abzugeben.

Die Abgabeeinheit verfügt für jedes Loch der Lochreihe 20 eine schräg nach unten führende Rutsche 33, deren Rinnen 34 die Artikel aufnehmen. Jedem Loch der Lochreihe 20 ist eine Rinne zugeordnet.

Die Artikel gelangen von der Fördertrommel 15 über die Rutsche 33 nach unten und werden in der zugehörigen Rinne von einem Artikeleinweiser 35 am unteren Ende gehalten, bis der Artikeleinweiser den Artikel freigibt, sodass dieser nach unten in die vorbeigeführte Plattenvertiefung eingelegt wird. Im dargestellten Ausführungsbeispiel sind jeder Lochreihe neun Löcher zugeordnet und demzufolge sind auch neun Rinnen mit Artikeleinweiser vorgesehen.

In einem bevorzugten Ausführungsmodell weist die Einlegeeinheit und deren Fördertrommel siebzehn Löcher pro Lochreihe auf und auch die Abgabeeinheit ist mit siebzehn Rinnen und Artikeleinweiser ausgestattet.

Die Artikeleinweiser 35 werden von der Einweiserwelle 36 gleichzeitig in Freigabestellung oder Geschlossenstellung geschwenkt. Der Antrieb der Einweiserwelle 36 erfolgt über einen Nockenhebel, der von der Steuerscheibe 37 und deren Nocken 38 betätigt wird.

Oberhalb der Abgabeeinheit ist eine sich über die axiale Erstreckung des Trommelrohres 41 oder der Lochreihe 20 reichende Auffangwanne 40 für herabfallende Artikel oder Artikelteile oder Schmutz angeordnet.

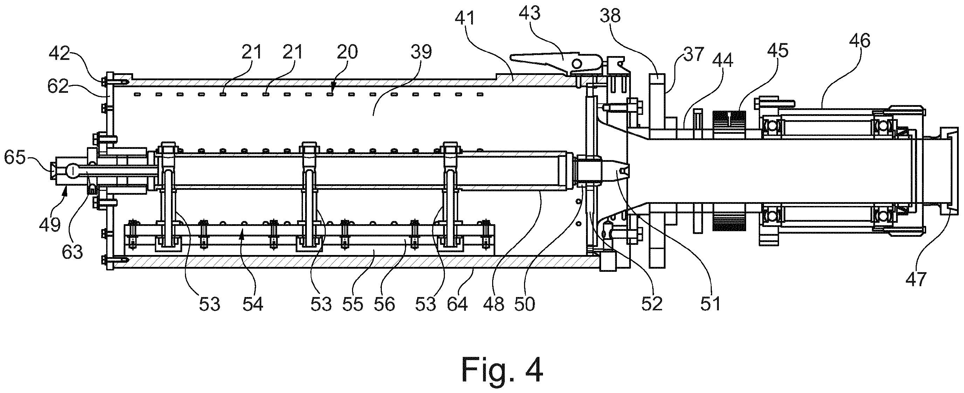

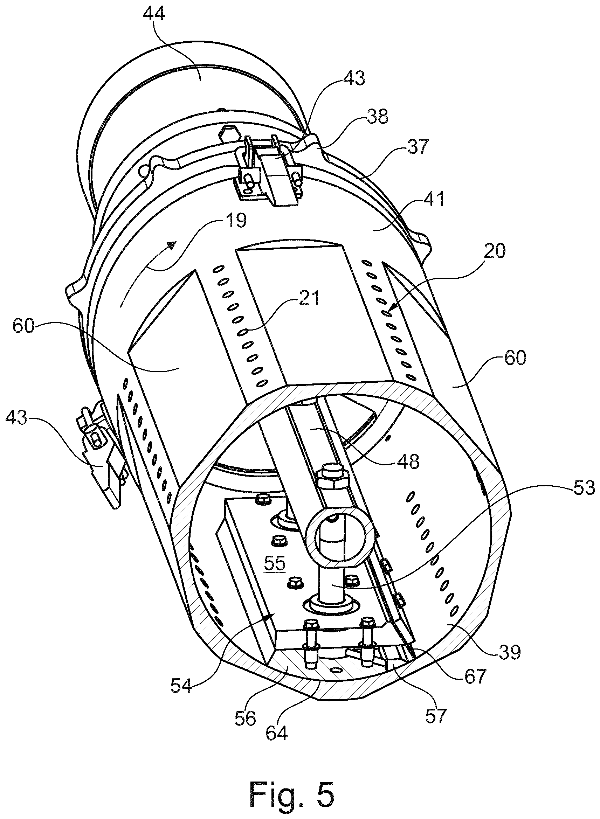

Die **Fig. 4** zeigt im Axialschnitt den Aufbau der Fördertrommel 15 und **Fig. 5** eine Schrägansicht mit Blick in die Trommel. Die Fördertrommel 15 umfasst ein Trommelrohr 41, welches über den Umfang verteilt mehrere Lochreihen 20 aufweist. Im vorliegenden Fall sind sieben Lochreihen vorgesehen. Bevorzugt beträgt die Anzahl der Lochreihen sechs, sieben oder acht Reihen. Die Fig. 4 zeigt die Fördertrommel über die gesamte Länge mit siebzehn Löchern 21 pro Lochreihe 20. Mit der Endkappe 62 ist das äußere Ende des Trommelrohrs verschlossen und mit den Befestigungsschrauben 42 verschraubt. Mittels Schnellverschlüssen 43 ist das Trommelrohr am Antriebsrohr 44 befestigt. Der Antrieb zum Drehen der Fördertrommel erfolgt über die Synchronscheibe 45 und den Zahnriemen 30 (gemäß Fig. 3), der von der Antriebseinheit 29 angetrieben wird. Auf dem Antriebsrohr 44 sitzt auch die Steuerscheibe 37 mit den Nocken 38.

Die Fördertrommel ist im Trommelhauptlager 46 gelagert und bedarf keines Gegenlagers auf der anderen Seite der Fördertrommel.

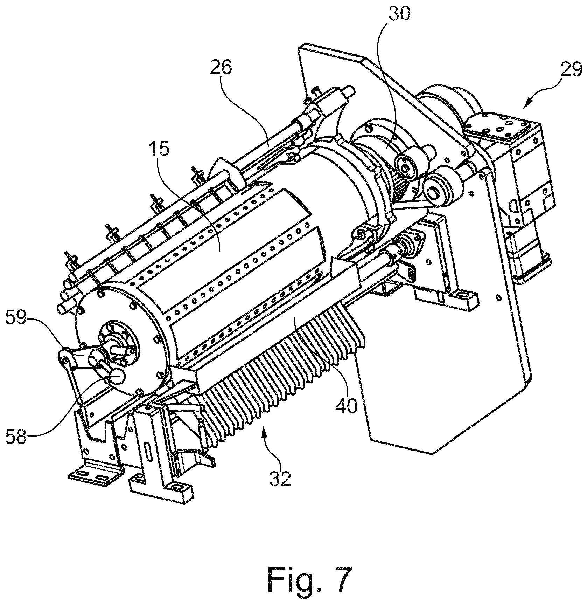

Am Antriebsrohr 44 ist über die Drehsaugkupplung 47 eine hier nicht dargestellte Unterdruckquelle anschließbar, sodass die gesamte Fördertrommel mit entsprechendem Unterdruck beaufschlagt werden kann. Im Zentrum des Trommelrohres 41 befindet sich eine fest stehende und bevorzugt hohle Welle 48, die von der Drehung der Fördertrommel nicht mitgenommen wird. Die Welle 48 wird am äußeren Ende 49 von einem Fixierhebel 58 und einem äußeren Schiebearm 59 (siehe Fig. 7) gehalten und am inneren Ende ist die Welle 48 mit dem Achsstummel 51 im Lager 50 gelagert. Das Lager 50 sitzt in einem Drehkreuz 52, welches sich mit der Fördertrommel mitdreht.

An der Welle 48 sind bevorzugt hohle Ausleger 53 vorgesehen, an deren Ende ein fest stehender Vakuumschieber 54 angeordnet ist. Dieser Vakuumschieber dient zum Abdecken der jeweils vorbeigedrehten Lochreihe des Trommelrohres, wobei sich der Vakuumschieber über alle Löcher der jeweiligen Lochreihe erstreckt.

Der Vakuumschieber 54 weist eine Aufnahmeplatte 55 und eine auf dieser angeordnete und gegenüber der zylindrischen Innenwand 39 des Trommelrohres 41 dichtend anliegende Dichtplatte 56 auf. Die Dichtplatte 56 ist beispielsweise aus Teflon, um gute Gleitfähigkeit und Abdichtung zu gewährleisten.

In der Dichtplatte 56 ist der Länge nach ein Ausblaskanal 57 angeordnet, der über Luftrohre mit einer Druckluftquelle verbindbar ist. Die Druckluftquelle kann am äußeren Ende 49 der Welle 48 angeschlossen werden. Druckluft ist dann bevorzugt oder notwendig, wenn die an den Löchern 21 angesaugten Artikel zum Haften auf der Oberfläche des Trommelrohres neigen. Die Druckluft gelangt über das axiale Rohr 57 über die innen hohlen Ausleger 53 in den Ausblaskanal 57. Der Ausblaskanal ist an beiden Enden gegenüber dem unter Unterdruck stehenden Innenraum des Trommelrohrs abgedichtet.

Die Funktionsweise der Fördertrommel 15 ist derart, dass die Trommel im Inneren ständig unter Unterdruck steht. Alle Lochreihen sind mit Nüssen oder Artikeln besetzt, sodass der Luftumsatz relativ gering ist. Lediglich eine der Lochreihen wird im Verlauf der Drehbewegung der Fördertrommel vom Vakuumschieber 54 abgedeckt, sodass bei dieser Lochreihe das Vakuum nicht mehr wirken kann und die Artikel schräg nach unten in die Abgabeeinheit rutschen. Wie gesagt kann mit Druckluft dieser Abgabe der Artikel etwas nachgeholfen werden. Die solcherart von Artikeln befreite Lochreihe gelangt unverzüglich darauf zur Sammelkammer 7 und kann dort wieder die entsprechende Anzahl an Artikeln ansaugen.

Es versteht sich von selbst, dass die Steuerscheibe 37 mit den Nocken 38 derart ausgebildet sein muss, dass die Einweiserwelle zum richtigen Zeitpunkt die Artikeleinweiser 35 bewegt, sodass die Artikel im richtigen Zeitpunkt in die darunter vorbeigeführten Produktvertiefungen einfallen.

Die **Fig. 6** gibt schematisch einen axialen Blick in die Fördertrommel 15 wieder und zeigt die Aufsicht auf das dreiarmige Drehkreuz 52 mit dem Trommelinnenlager 50. Das Drehkreuz wird von der Fördertrommel mitgedreht, während die Hohlwelle 48, deren Achsstummel 51 im Trommelinnenlager 50 gelagert ist, feststehend ist. Schematisch ist eine Produktplatte 3 eingezeichnet, deren Plattenvertiefung 4 in jener Stellung gezeigt ist, in der der Artikel 66 bereits in die Plattenvertiefung 4 gefallen oder durch den Luftstrom des Ausblaskanals 57 ausgestoßen worden war. Der Abstreifer 67 reinigt die zylindrische Innenwand der Fördertrommel von etwaigen Verschmutzungen, die möglicherweise in die Fördertrommel eingesaugt wurden.

Die **Fig. 7** zeigt eine Zusammenstellung der beschriebenen Vorrichtungsteile und illustriert die Anordnung am äußeren Ende des Trommelrohres mit dem Fixierhebel 58 und dem äußeren Schieberarm 59. Der Schieberarm 59 dient zum Aufbringen der Reibungskräfte zwischen der Dichtplatte 56 und der inneren Zylinderwand des Trommelrohres. Wie den Darstellungen des Trommelrohres zu entnehmen ist, befinden sich zwischen den Lochreihen jeweils Einsenkungen 60, sodass die Außenfläche des Trommelrohres nicht zylinderförmig, sondern mehreckig ausgebildet ist. Die äußeren Mündungen der Löcher der Lochreihen liegen somit von der Drehachse weiter entfernt als die Oberfläche der dazwischen liegenden Senke. Durch diese mehrkantige Ausführung des Trommelrohres ist der vorteilhafte Effekt gegeben, dass beim Aufnehmen der Artikel in oder an der Sammelkammer ein Rühreffekt auftritt, der das Aufnehmen der Artikel erleichtert.

### Bezugszeichenliste

- 1: Rahmengestell
- 2: Einlegeeinheit
- 3: Produktplatte
- 4: Plattenvertiefung
- 5: Förderband
- 6: Transportband
- 7: Entnahmevorrichtung
- 8: Bedienpult
- 9: Andruckwalze
- 10: Bodenrahmen
- 11: Räder
- 12: Sammelkammer
- 13: Leitblech
- 14: aufsteigender Bereich
- 15: Fördertrommel
- 16: Vorderwand
- 17: Rüttelstäbe
- 18: Abstreifer
- 19: Pfeil Drehrichtung
- 20: Lochreihe
- 21: Löcher
- 22: Abstreifeinheit
- 23: Kammstangen
- 24: Kammzähne
- 25: Bürste
- 26: Blasrohr
- 27: Blasnadeln
- 28: absteigender Bereich
- 29: Antriebseinheit
- 30: Zahnriemen
- 31: Spannrolle
- 32: Abgabeeinheit
- 33: Rutsche
- 34: Rinne
- 35: Artikeleinweiser
- 36: Einweiserwelle
- 37: Steuerscheibe
- 38: Nocken
- 39: zylindrische Innenwand
- 40: Auffangwanne
- 41: Trommelrohr
- 42: Befestigungsschrauben
- 43: Schnellverschlüsse
- 44: Antriebsrohr
- 45: Synchronscheibe
- 46: Trommelhauptlager
- 47: Drehsaugkupplung
- 48: Welle
- 49: Ende
- 50: Trommelinnenlager
- 51: Achsstummel
- 52: Drehkreuz
- 53: Ausleger
- 54: Vakuumschieber
- 55: Aufnahmeplatte
- 56: Dichtplatte
- 57: Ausblaskanal
- 58: Fixierhebel
- 59: Schieberarm
- 60: Einsenkung
- 61: zylindrische Außenwandabschnitte
- 62: Trommeldeckel
- 63: Trommelaußenlager
- 64: Gleitfläche
- 65: Luftrohr
- 66: Artikel
- 67: Abstreifer

## Patentansprüche

1. Einlegevorrichtung mit zumindest einer Einlegeeinheit (2) zum Einbringen von losen Artikeln, wie z. B. Mandelkerne, Haselnusskerne, gepuffte Getreidekörner, Fruchtstücke etc., in Plattenvertiefungen (4) von ebenen Produktplatten (3) oder Produktformen, wie z. B. gebackene Waffeltafeln, wobei die Vertiefungen (4) in Längsreihen hintereinander angeordnet sind und wobei wenigstens eine Einlegeeinheit (2) vorgesehen ist, die eine die Artikel in einer losen Anordnung enthaltende Sammelkammer (12), sowie eine die Artikel vereinzelt aus der Sammelkammer nach oben hinausbefördernde Entnahmevorrichtung (7) und eine die entnommenen und angehobenen Artikel in einer Rutschvorrichtung (33) zur Unterseite der Einlegeeinheit (2) hinunterführende Abgabevorrichtung aufweist und die Entnahmevorrichtung (7) mit einer, mit einer Unterdruckquelle verbundenen, drehbaren Fördertrommel (15) mit einem Trommelrohr (41) versehen ist, welches in und an die Sammelkammer (12) reicht, **dadurch gekennzeichnet, dass** die um ihre Achse drehbare Fördertrommel (15) am Trommelrohr (41) zumindest zwei achsparallel angeordnete Lochreihen (20) aufweist, dass das Trommelrohr (41) eine zylindrische Innenwand (39) und zylindrische Außenwandabschnitte (61) aufweist, dass die Lochreihen (20) jeweils im Bereich der zylindrischen Außenwandabschnitte (61) angeordnet sind und dass zwischen den zylindrischen Außenwandabschnitten (61) Einsenkungen (60) in das Trommelrohr vorgesehen sind.

2. Einlegevorrichtung nach Anspruch 1, **dadurch gekennzeichnet, dass** das Trommelrohr (41) der Fördertrommel (15) über Ihren Umfang verteilt drei oder mehr Lochreihen (20), bevorzugt sechs, sieben oder acht Lochreihen (20) aufweist.

3. Einlegevorrichtung nach Anspruch 1 oder 2, **dadurch gekennzeichnet, dass** die Fördertrommel (15) einseitig ein coaxiales und mit einer Luftunterdruckquelle verbindbares Antriebsrohr (44) aufweist, welches drehbar gelagert und über eine Antriebseinheit (29) angetrieben ist und dass das Trommelrohr (15) am freien Ende mit einem Trommeldeckel (62) verschlossen ist.

4. Einlegevorrichtung nach einem der Ansprüche 1 bis 3, **dadurch gekennzeichnet, dass** das Trommelrohr (41) im Inneren einen feststehenden Vakuumschieber (54) zum Abdecken der jeweils vorbeigedrehten Lochreihe (20) des Trommelrohrs (41) aufweist, wobei sich der Vakuumschieber über alle Löcher (21) der Lochreihe (20) erstreckt.

5. Einlegevorrichtung nach Anspruch 4, **dadurch gekennzeichnet, dass** der Vakuumschieber (54) an einer feststehenden Welle (48), insbesondere Hohlwelle, befestigt ist, die zur Weiterleitung von außen zugeführter Druckluft und Zuleitung der Druckluft zu einem Ausblaskanal (57) des Vakuumschiebers (54) aufweist.

6. Einlegevorrichtung nach einem der vorhergehenden Ansprüche 3 oder 4 bzw. 5, wenn von Anspruch 3 abhängig, **dadurch gekennzeichnet, dass** das Trommelrohr (41) an seinem freien Ende (49) mit seinem Trommeldeckel (62) über ein Trommelaußenlager (63) an der Welle (48) gelagert ist und dass das andere Ende der Welle mit einem Achsstummel (51) in einem Trommelinnenlager (50) gelagert ist.

7. Einlegevorrichtung nach einem der vorhergehenden Ansprüche 3 und 4, oder 5 bzw. 6, wenn von den Ansprüchen 3 und 4 abhängig, **dadurch gekennzeichnet, dass** das Trommelrohr (41) mit der in ihr angeordneten Welle (48) und dem Vakuumschieber (54) vom Antriebsrohr (44) trennbar und bevorzugt über Schnellverschlüsse (43) wieder anschließbar ausgebildet ist.

8. Einlegevorrichtung nach einem der vorhergehenden Ansprüche 1 bis 7, **dadurch gekennzeichnet, dass** am innenseitigen Ende des Trommelrohres (41) oder am Antriebsrohr eine Steuerscheibe (37), insbesondere eine Nockenscheibe (38), zum synchronisierten Betätigen nachgeschalteter Vorrichtungselemente vorgesehen ist.

9. Einlegevorrichtung nach einem der vorhergehenden Ansprüche 4 oder 5 bis 8, wenn von Anspruch 4 abhängig, **dadurch gekennzeichnet, dass** der Vakuumschieber (54) eine Aufnahmeplatte (55) und eine auf dieser angeordnete und gegenüber der zylindrischen Innenwand (39) des Trommelrohres (41) dichtend anliegende Dichtplatte (56) aufweist.

10. Einlegevorrichtung nach einem der vorhergehenden Ansprüche 5 oder 5-9, wenn von Anspruch 5 abhängig, **dadurch gekennzeichnet, dass** der Ausblaskanal (57) an der Gleitfläche (64) der Dichtplatte (56) angeordnet ist und über ein Luftrohr (65) mit einer Druckluftquelle verbunden oder verbindbar ist.

11. Einlegevorrichtung nach einem der vorhergehenden Ansprüche 1 bis 10, **dadurch gekennzeichnet, dass** die Löcher (21) jeder Lochreihe (20) einen sich von Innen nach Außen verringernden Durchmesser aufweisen.

12. Einlegevorrichtung nach einem der vorhergehenden Ansprüche 1 bis 11, **dadurch gekennzeichnet, dass** im ansteigenden Bereich (14) an der Außenseite der Fördertrommel (15) im Bereich unmittelbar nach der Aufnahme der Artikel aus der Sammelkammer eine Abstreifeinheit (22) vorgesehen ist, die zumindest zwei Kammstangen (23) aufweist, deren Kammzähne (24) jeweils unmittelbar zu beiden Seiten jedes Loches (21) gehalten sind, um ein Zentrieren des angesaugten Artikels über dem vorbeigedrehten Loch (21) zu gewährleisten und die Anlagerung mehrerer Artikel zu verhindern.

13. Einlegevorrichtung nach Anspruch 12, **dadurch gekennzeichnet, dass** in Drehrichtung der Fördertrommel (15) den beiden Kammstangen (23) eine Bürste (25) nachgeordnet ist, um das Trommelrohr (41) zu säubern.

14. Einlegevorrichtung nach einem der vorhergehenden Ansprüche 12 oder 13, **dadurch gekennzeichnet, dass** die Abstreifeinheit (22) ein Blasrohr (26) mit gegen die Fördertrommel (15) gerichteten Blasnadeln (27) aufweist.

15. Einlegevorrichtung nach einem der vorhergehenden Ansprüche 1 bis 14, **dadurch gekennzeichnet, dass** im absteigenden Bereich (28) der Fördertrommel (15) eine Abgabeeinheit (32) vorgesehen ist, die die Artikel (66) den Plattenvertiefungen (4) zuordnet und in diese abgibt.

16. Einlegevorrichtung nach Anspruch 15, **dadurch gekennzeichnet, dass** die Abgabeeinheit (32) für jedes Loch (21) der Lochreihe (20) eine schräg nach unten zur vorbeibewegten Produktplatte (3) führende Rutsche (33) mit einer den Artikel nach unten führenden Rinne (34) aufweist und dass die Artikel am unteren Ende von einem Artikeleinweiser (35) in der Rinne (34) gehalten und in die Plattenvertiefung (4) abgegeben wird.

17. Einlegevorrichtung nach Anspruch 16, **dadurch gekennzeichnet, dass** alle Artikeleinweiser (35) nebeneinander auf einer von der Steuerscheibe (37) und deren Nocken (38) betätigten Einweiserwelle (36) angeordnet sind.

18. Einlegevorrichtung nach einem der vorhergehenden Ansprüche 15 bis 17, **dadurch gekennzeichnet, dass** oberhalb der Abgabeeinheit (32) eine sich über die axiale Erstreckung des Trommelrohres (41) oder der Lochreihe (20) reichende Auffangwanne (40) für herabfallende Artikel oder Artikelteile oder Schmutz angeordnet ist.

19. Einlegevorrichtung nach einem der vorhergehenden Ansprüche 1 bis 18, **dadurch gekennzeichnet, dass** die Einlegeeinheit (2) auf einem mit Rädern (11) versehenen Bodenrahmen (10) montiert ist, sodass die Einlegeeinheit (2) auf Schienen des Rahmengestells (1) der Einlegeeinheit (2) bewegbar ist.

20. Einlegevorrichtung nach Anspruch 19, **dadurch gekennzeichnet, dass** im Rahmengestell (1) zwei oder mehr Einlegeeinheiten (2) in Serie vorgesehen sind.

21. Einlegevorrichtung nach einem der vorhergehenden Ansprüche 1 bis 20, **dadurch gekennzeichnet, dass** im Rahmengestell (1) der/den Einlegeeinheiten (2) eine die Artikel in die Plattenvertiefungen (4) eindrückende Andruckwalze (9) vorgesehen ist.

## Claims

1. Depositing device having at least one depositing unit (2) for depositing loose items such as almond kernels, hazelnut kernels, puffed cereal grains, pieces of fruit etc. in recesses (4) of flat product plates (3) or product forms such as baked waffles, wherein the recesses (4) are arranged one behind the other in longitudinal rows and wherein at least one depositing unit (2) is provided which has a collecting chamber (12) that contains the items in a loose arrangement, and a removal device (7) that conveys the items singly upwards out of the collecting chamber (12) and a discharge device that guides the removed and raised items down to the underside of the depositing unit (2) in a chute apparatus (33), and the removal device (7) is equipped with a rotatable feed drum (15) that has a drum shell (41) and is connected to a negative pressure source, which drum shell extends into and as far as the collecting chamber (12), **characterized in that** the feed drum (15) which is rotatable about its own axis has at least two axially parallel rows of holes (20) arranged on the drum shell (41), that the drum shell (41) has a cylindrical inner wall (39) and cylindrical outer wall sections (61), that the rows of holes (20) are each arranged in the region of the cylindrical outer wall sections (61), and that depressions (60) in the drum shell are arranged between the cylindrical outer wall sections (61).

2. Depositing device according to Claim 1, **characterized in that** the drum shell (41) of the feed drum (15) has three or four rows of holes (20), preferably six, seven or eight rows of holes (20), distributed about its circumference.

3. Depositing device according to Claim 1 or 2, **characterized in that** the feed drum (15) has a coaxially disposed drive pipe (44) on one side thereof, which pipe can be connected to a source of negative air pressure and is mounted rotatably and driven via a drive unit (29), and that the free end of the drum shell (41) is closed off by a drum cover (62).

4. Depositing device according to any one of Claims 1 to 3, **characterized in that** the drum shell (41) has a fixed vacuum ram (54) in the interior thereof for covering each row of holes (20) in the drum shell (41) which has rotated past, wherein the vacuum ram extends over all of the holes (21) in the row of holes (20).

5. Depositing device according to Claim 4, **characterized in that** the vacuum ram (54) is attached to a stationary shaft (48), in particular a hollow shaft, which is provided for forwarding externally supplied compressed air and feeding the compressed air to an outlet duct (57) of the vacuum ram (54).

6. Depositing device according to one of the preceding Claims 3 or 4 and/or 5 if dependent on Claim 3, **characterized in that** the free end (49) of the drum shell (41) with its drum cover (62) is mounted on the shaft (48) via a drum outer bearing (63), and that the other end of the shaft is mounted in a drum inner bearing (50) with a stub shaft (51).

7. Depositing device according to one of the preceding Claims 3 and 4, or 5 and/or 6 if dependent on Claims 3 and 4, **characterized in that** the drum shell (41) with the shaft (48) arranged therein and the vacuum ram (54) is constructed so as to be detachable from the drive pipe (44) and preferably so as to be connectable again with the aid of quick release fasteners (43).

8. Depositing device according to any one of the preceding Claims 1 to 7, **characterized in that** a control disc (37), particularly a cam disc (38) is provided on the inside end of the drum shell (41) or on the drive pipe for synchronised actuation of subsequent device elements.

9. Depositing device according to one of the preceding Claims 4, or 5 to 8 if dependent on Claim 4, **characterized in that** the vacuum ram (54) has a mounting plate (55) and a sealing plate (56) arranged thereon and positioned flush and in sealing manner opposite the cylindrical inner wall (39) of the drum shell (41).

10. Depositing device according to one of the preceding Claims 5, or 5 to 9 if dependent on Claim 5, **characterized in that** outlet duct (57) is arranged on the sliding surface (64) of the sealing plate (56) and is connected or connectable to a compressed air source via an air pipe (65).

11. Depositing device according to any one of the preceding Claims 1 to 10, **characterized in that** the holes (21) in each row of holes (20) have a diameter which diminishes from the inside to the outside.

12. Depositing device according to any one of the preceding Claims 1 to 11, **characterized in that** a wiper unit (22) is provided in the rising area (14) on the outside of the feed drum (15) in the region immediately after the item pick-up from the collecting chamber, which wiper unit has at least two combing rods (23), the comb teeth (24) of which are each retained directly on both side of each hole (21) to ensure that the aspirated item is centred above the hole (21) as it rotates past and to prevent multiple items from accumulating.

13. Depositing device according to Claim 12, **characterized in that** a brush (25) is disposed after the two combing rods (23) in the direction of rotation of the feed drum (15) in order to clean the drum shell (41).

14. Depositing device according to one of the preceding Claims 12 or 13, **characterized in that** the wiper unit (22) has a blowing tube (26) with blowing pins (27) directed towards the feed drum (15).

15. Depositing device according to any one of the preceding Claims 1 to 14, **characterized in that** a dispensing unit (32) is provided in the descending area (28) of the feed drum (15), which dispensing unit assigns the items (66) to the recesses (4) in the plate and dispenses the items into them.

16. Depositing device according to Claim 15, **characterized in that** for each hole (21) of the row of holes (20) the dispensing unit (32) has a downward sloping chute (33) leading to the product plate (3) having a channel (34) that guides the item downwards, and that at the bottom end the items are kept in the channel (34) by an item allocator (35) and dispensed into the recess (4) in the plate.

17. Depositing device according to Claim 16, **characterized in that** all item allocators (35) are arranged side by side on an allocator shaft (36) which is actuated by the control disc (37) and its cams (38).

18. Depositing device according to any one of the preceding Claims 15 to 17, **characterized in that** a catch tray (40) reaching over the axial extension of the drum shell (41) or of the row of holes (20) is arranged above the dispensing unit (32) to catch falling items or item parts or dirt.

19. Depositing device according to any one of the preceding Claims 15 to 18, **characterized in that** the depositing device (2) is mounted on a floor frame (10) fitted with wheels (11), so that the depositing device (2) is movable on rails of the frame structure (1) of the depositing device (2).

20. Depositing device according to Claim 19, **characterized in that** two or more depositing devices (2) are provided in series in the frame structure (1).

21. Depositing device according to any one of the preceding Claims 1 to 20, **characterized in that** a pinch roller (9) pressing the items into the recesses (4) in the plate is provided in the frame structure (1) for the one or more depositing device(s) (2).

## Revendications

1. Dispositif d'insertion pourvu d'au moins une unité d'insertion (2), destinée à introduire des articles en vrac, par ex. des amandes, des noisettes, des céréales soufflées, des morceaux de fruits, etc. dans des creux de plaques (4) ménagés dans des plaques à produits (3) ou moules à produits plans, comme par ex. des tablettes de gaufres cuites, les creux (4) étant placés les uns derrière les autres en rangées longitudinales et au moins une unité d'insertion (2) étant prévue qui comporte un compartiment collecteur (12) contenant les articles disposés en vrac, ainsi qu'un dispositif de prélèvement (7) qui convoie les articles un à un, hors du compartiment collecteur vers le haut et un dispositif distributeur guidant les articles prélevés et soulevés dans un dispositif de glissière (33), vers la face inférieure de l'unité d'insertion (2) et le dispositif de prélèvement (7) étant muni d'un tambour convoyeur (15) rotatif, relié avec une source de dépression, pourvu d'un cylindre de tambour (41) lequel arrive jusque dans et sur le compartiment collecteur (12), **caractérisé en ce que** le tambour convoyeur (15) rotatif autour de son axe comporte sur le cylindre de tambour (41) au moins deux rangées de trous (20) placées de manière axialement parallèle, **en ce que** le cylindre de tambour (41) comporte une paroi intérieure cylindrique (39) et des tronçons de paroi extérieure cylindrique (61), **en ce que** les rangées de trous (20) sont placées respectivement dans la zone des tronçons de paroi extérieure cylindrique (61) et **en ce qu'**entre les tronçons de paroi extérieure cylindrique (61) sont prévu des affaissements (60) dans le cylindre de tambour.

2. Dispositif d'insertion selon la revendication 1, **caractérisé en ce que** le cylindre de tambour (41) du tambour convoyeur (15) comporte trois rangées de trous (20) ou plus, de préférence six, sept ou huit rangées de trous (20) distribuées sur sa circonférence.

3. Dispositif d'insertion selon la revendication 1 ou 2, **caractérisé en ce que** le tambour convoyeur (15) comporte sur un côté un tube d'entraînement (44) coaxial et susceptible d'être raccordé sur une source de dépression d'air, qui est logé de manière rotative et entraîné par l'intermédiaire d'une unité d'entraînement (29) et **en ce que** sur l'extrémité libre, le cylindre de tambour (41) est fermé par un couvercle de tambour (62).

4. Dispositif d'insertion selon l'une quelconque des revendications 1 à 3, **caractérisé en ce qu'**à l'intérieur, le cylindre de tambour (41) comporte une vanne à vide (54) stationnaire, destinée à recouvrir la rangée de trous (20) du cylindre de tambour (41) qui passe respectivement devant lui lors de la rotation, la vanne à vide s'étendant sur tous les trous (21) de la rangée de trous (20).

5. Dispositif d'insertion selon la revendication 4, **caractérisé en ce que** la vanne à vide (54) est fixée sur un arbre (48) stationnaire, notamment un arbre creux, qui pour la retransmission d'air comprimé alimenté par l'extérieur et l'alimentation de l'air comprimé vers un canal de soufflage (57) de la vanne à vide (54) comporte.

6. Dispositif d'insertion selon l'une quelconque des revendications précédentes 3 ou 4, voire 5, si elle dépend de la revendication 3, **caractérisé en ce que** sur son extrémité libre (49), par l'intermédiaire d'un palier extérieur de tambour (63), le cylindre de tambour (41) est logé par son couvercle de tambour (62) sur l'arbre (48) et **en ce que** par un tourillon d'axe (51), l'autre extrémité de l'arbre est logée dans un palier intérieur de tambour (50).

7. Dispositif d'insertion selon l'une quelconque des revendications précédentes 3 et 4 ou 5, voire 6, si elle dépend des revendications 3 et 4, **caractérisé en ce que** le cylindre de tambour (41) avec l'arbre (48) qui est placé en son intérieur et la vanne à vide (54) est conçu de manière à pouvoir être désolidarisé du tube d'entraînement (44) et de préférence à nouveau raccordé sur celui-ci par l'intermédiaire de fermetures rapides (43).

8. Dispositif d'insertion selon l'une quelconque des revendications précédentes 1 à 7, **caractérisé en ce que** sur l'extrémité côté interne du cylindre de tambour (41) ou sur le tube d'entraînement est prévu un disque de commande (37), notamment un disque à came (38), destiné à l'actionnement synchronisé d'éléments du dispositif montés en aval.

9. Dispositif d'insertion selon l'une quelconque des revendications précédentes 4 ou 5 à 8, si elles dépendent de la revendication 4, **caractérisé en ce que** la vanne à vide (54) comporte une plaque réceptrice (55) et une plaque d'étanchéité (56) placée sur cette dernière et jouxtant de manière à assurer l'étanchéité la paroi intérieure cylindrique (39) du cylindre de tambour (41).

10. Dispositif d'insertion selon l'une quelconque des revendications précédentes 5 ou 5 à 9, si elles dépendent de la revendication 5, **caractérisé en ce que** le canal de soufflage (57) est placé sur la surface de glissement (64) de la plaque d'étanchéité (56) et est raccordé ou susceptible d'être raccordé par l'intermédiaire d'un tube d'air (65) sur une source d'air comprimé.

11. Dispositif d'insertion selon l'une quelconque des revendications précédentes 1 à 10, **caractérisé en ce que** les trous (21) de chaque rangée de trous (20) présentent un diamètre qui se rétrécit de l'intérieur vers l'extérieur.

12. Dispositif d'insertion selon l'une quelconque des revendications précédentes 1 à 11, **caractérisé en ce que** dans la zone croissante (14), sur la face extérieure du tambour convoyeur (15), dans la zone directement après la reprise de l'article hors du compartiment collecteur est prévue une unité racleuse (22) qui comporte au moins deux râteliers (23) dont les dents (24) sont respectivement maintenues des deux côtés de chaque trou (21) pour assurer un centrage de l'article aspiré au-dessus du trou (21) qui passe respectivement devant lui lors de la rotation et pour empêcher l'accumulation de plusieurs articles.

13. Dispositif d'insertion selon la revendication 12, **caractérisé en ce que** dans la direction de rotation du tambour convoyeur (15), une brosse (25) est placée en aval des deux râteliers (23) pour nettoyer le cylindre de tambour (41).

14. Dispositif d'insertion selon l'une quelconque des revendications précédentes 12 ou 13, **caractérisé en ce que** l'unité racleuse (22) comporte un tube de soufflage (26) pourvu d'aiguilles de soufflage (27) dirigées vers le tambour convoyeur (15).

15. Dispositif d'insertion selon l'une quelconque des revendications précédentes 1 à 14, **caractérisé en ce que** dans la zone décroissante (28) du tambour convoyeur (15) est prévue une unité distributrice (32) qui associe les articles (66) aux creux de plaques (4) et les distribue dans ces derniers.

16. Dispositif d'insertion selon la revendication 15, **caractérisé en ce que** l'unité distributrice (32) comporte pour chaque trou (21) de la rangée de trous (20) une glissière (33) conduisant en oblique vers le bas, vers la plaque à produit (3) déplacée devant celui-ci, pourvue d'une rigole (34) conduisant l'article vers le bas et **en ce que** les articles sont maintenus par l'extrémité inférieure dans la rigole (34) par un guide d'article (35) et distribués dans le creux de plaque (4).

17. Dispositif d'insertion selon la revendication 16, **caractérisé en ce que** tous les guides d'articles (35) sont placés côte à côte sur un arbre de guide (36) actionné par le disque de commande (37) et ses cames (38).

18. Dispositif d'insertion selon l'une quelconque des revendications précédentes 15 à 17, **caractérisé en ce qu'**au-dessus de l'unité distributrice (32) est placée une cuve collectrice (40) s'écoulant sur l'extrémité axiale du cylindre de tambour (41) ou de la rangée de trous (20) pour des articles ou parties d'articles qui chutent ou des salissures.

19. Dispositif d'insertion selon l'une quelconque des revendications précédentes 1 à 18, **caractérisé en ce que** l'unité d'insertion (2) est montée sur un cadre de sol (10) muni de roues (11), de sorte que l'unité d'insertion (2) soit déplaçable sur des rails du châssis de cadre (1) de l'unité d'insertion (2).

20. Dispositif d'insertion selon la revendication 19, **caractérisé en ce que** dans le châssis de cadre (1) sont prévues en série deux unités d'insertion (2) ou plus.

21. Dispositif d'insertion selon l'une quelconque des revendications précédentes 1 à 20, **caractérisé en ce que** dans le châssis de cadre (1) de la/des unité (s) d'insertion (2) est prévu un rouleau presseur (9) pressant les articles dans les creux de plaques (4).
